Europäisches Patentamt

European Patent Office

Office européen des brevets

(19)

(11) **EP 0 816 287 B1**

(12) **EUROPÄISCHE PATENTSCHRIFT**

(45) Veröffentlichungstag und Bekanntmachung des Hinweises auf die Patenterteilung:
**26.01.2000  Patentblatt 2000/04**

(51) Int Cl.$^7$: **C01B 25/10**

(21) Anmeldenummer: **97109920.5**

(22) Anmeldetag: **18.06.1997**

(54) **Herstellung anorganischer Pentafluoride**

Preparation of anorganic pentafluorides

Préparation de pentafluorure inorganique

(84) Benannte Vertragsstaaten:
**AT BE CH DE DK ES FI FR GB GR IE IT LI LU NL PT SE**

(30) Priorität: **26.06.1996  DE 19625528
27.03.1997  DE 19712990
28.05.1997  DE 19722269**

(43) Veröffentlichungstag der Anmeldung:
**07.01.1998  Patentblatt 1998/02**

(73) Patentinhaber: **Solvay Fluor und Derivate GmbH
D-30173 Hannover (DE)**

(72) Erfinder:
• **Schulz, Alf
30900 Wedemark (DE)**
• **Seffer, Dirk
31535 Neustadt (DE)**
• **Rieland, Matthias
30539 Hannover (DE)**
• **Rudolph, Werner
30559 Hannover (DE)**

(74) Vertreter: **Lauer, Dieter, Dr.
Solvay Pharmaceuticals GmbH,
Hans-Böckler-Allee 20
30173 Hannover (DE)**

(56) Entgegenhaltungen:
**DE-A- 2 928 599          DE-A- 3 129 373**

## Beschreibung

Die Erfindung betrifft die Herstellung von Phosphor- und Arsenpentafluorid. Phosphorpentafluorid kann mit Lithiumfluorid zu Lithiumhexafluorphosphat umgesetzt werden. Für den gleichen Zweck kann auch Arsenpentafluorid eingesetzt werden, das in Form von Lithiumhexafluorarsenat ebenfalls als Leitsalz in Lithium-Ionen-Batterien verwendet werden kann; siehe US-A 5,427,874.

Phosphorpentafluorid wird beispielsweise aus Phosphorpentachlorid und Fluorwasserstoff hergestellt, Arsenpentafluorid aus dem Metall und elementarem Fluor. Dieses Verfahren ist energetisch ungünstig; außerdem ist elementares Fluor sehr aggressiv.

Aufgabe der vorliegenden Erfindung ist es, ein technisch einfach durchzuführendes Verfahren zur Herstellung von Pentafluoriden des Phosphors und des Arsens anzugeben. Diese Aufgabe wird durch das in den Ansprüchen angegebene Verfahren gelöst. Die erfindungsgemäße Herstellung von $MF_5$, worin M für P oder As steht, erfolgt durch Umsetzung von $MX_3$, worin M die obengenannte Bedeutung besitzt und X Fluor, Chlor oder Brom bedeutet, mit Chlor, Brom oder Jod sowie HF.

Vorzugsweise nutzt man das erfindungsgemäße Verfahren zur Herstellung von Phosphorpentafluorid. Bevorzugt geht man aus von Phosphortrichlorid oder Phosphortribromid bzw. Arsentrichlorid bzw. Arsentribromid. Man setzt die jeweilige Ausgangsverbindung vorzugsweise mit Chlor oder Brom, insbesondere Chlor um, um die dreiwertige Ausgangsverbindung in die fünfwertige Stufe zu oxidieren.

Dabei hat es sich als besonders vorteilhaft erwiesen, wenn man das Verfahren kontinuierlich durchführt, auch wenn die batchweise Durchführung natürlich möglich ist. Bei der bevorzugten kontinuierlichen Vorgehensweise kann man so vorgehen, daß im Reaktor ein Überschuß an der dreiwertigen Ausgangsverbindung, verglichen mit dem Oxidationsmittel Chlor, Brom oder Jod, vorliegt. Alternativ kann auch ein Überschuß des Oxidationsmittel eingesetzt werden. Gute Ergebnisse werden auch erzielt bei stöchiometrischem Einsatz der Reaktanten. Flußsäure wird zweckmäßig mindestens in der stöchiometrisch notwendigen Menge eingesetzt. Sie kann in einem Überschuß eingesetzt werden und dient dann als Lösemittel. Beispielsweise kann HF bis zu 70 Gew.-% oder mehr der Reaktionsmischung ausmachen. Es sollte auch stets genügend Fluorwasserstoff im Reaktor vorhanden sein, so daß kontinuierlich entsprechend der Zugabe der Ausgangsverbindungen das Verfahrensprodukt (nämlich die Pentafluorverbindung) abdampft. Man kann beispielsweise so vorgehen, daß man zunächst die dreiwertige Ausgangsverbindung sowie genügend Fluorwasserstoff vorlegt und das Oxidationsmittel in diese Mischung einträgt. Die Reaktanten kann man dann kontinuierlich in den Reaktor einleiten. Durch Dosierung des Oxidationsmittels bzw. der 3-wertigen Verbindung gelingt es, die Reaktionsgeschwindigkeit zu steuern. Es empfiehlt sich, das Reaktionsgemisch zu rühren.

Vorteilhaft arbeitet man oberhalb einer Temperatur von -100 °C. Besonders gute Ergebnisse werden im Temperaturbereich von -25 °C bis 100 °C erzielt, insbesondere im Temperaturbereich von 0 °C bis 40 °C. Dabei kann man gewünschtenfalls bei Überdruck, oder auch bei Normaldruck arbeiten, z. B. im Autoklaven bei autogenem Druck.

Aufgrund der großen Hydrolyseempfindlichkeit der Verbindungen arbeitet man zweckmäßig unter Inertgas bzw. unter Ausschluß von Feuchtigkeit.

Der Vorteil des erfindungsgemäßen Verfahrens ist es, daß man die Reaktion leicht durchführen kann, da die Ausgangsverbindungen gut dosiert werden können und die Reaktion durch entsprechendes Dosieren des Oxidationsmittels bzw. der 3-wertigen Ausgangsverbindung auf einfache Weise gesteuert werden kann. Besonders gut eignet sich das Verfahren zur Herstellung von Phosphorpentafluorid aus Phosphortrichlorid und Brom oder Chlor sowie HF.

Die folgenden Beispiele sollen die Erfindung weiter erläutern, ohne sie in ihrem Umfang einzuschränken.

## Beispiele

### Beispiel 1:

Herstellung von $PF_5$ (batch-Verfahren)

Reaktion:

$$PCl_3 + 5HF + Cl_2 \text{ ----------> } PF_5 + 5\,HCl$$

| Ansatz: | |
|---|---|
| Ansatz: 1/10 Mol | |
| $PCl_3$ (137 g/Mol) d = 1,57 $g/cm^3$ | 10 ml (incl. 10 % Übersch.) |
| HF (20 g/Mol) d = 1 $g/cm^3$ | 10 ml |
| $Cl_2$ (35,5 g/Mol) | 7 g |

Durchführung:

$PCl_3$ und HF im 250 ml Autoklaven vorgelegt, auf -43 °C abgekühlt und das Chlor in die Flüssigphase eingeleitet. Dabei Temperaturanstieg auf -39 °C. Anschließend Autoklav auf Rührer gestellt und auf Raumtemperatur erwärmt. Bei Inbetriebnahme des Rührers stieg die Temperatur augenblicklich auf -1 °C, kühlte sich dann aber wieder ab. Die Temperatur erreichte nach einer Stunde Raumtemperatur (22 °C), und es stellte sich ein Druck von 37 bar ein. Über Nacht unter Rühren stehengelassen. Ein Gemisch von $PF_5$ und HCl dampft ab. Die Isolierung des hergestellten $PF_5$ kann durch übliche Trennmethoden, z. B. eine Druckdestillation, erfolgen. Die Ausbeute an $PF_5$, bezogen auf das eingesetzte Chlor, betrug >99 %.

**Beispiel 2:**

Herstellung von $PF_5$ (batch-Verfahren)

Reaktion:

$$PCl_3 + 5HF + Br_2 \text{-------}> PF_5 + 3HCl + 2HBr$$

| Ansatz: | |
|---|---|
| Ansatz: 1/10 Mol | |
| $PCl_3$ (137 g/Mol) d = 1,57 $g/cm^3$ | 10 ml (incl. 10 % Übersch.) |
| HF (20 g/Mol) d = 1 $g/cm^3$ | 80 ml |
| $Br_2$ (160 g/Mol) | 16 g |

Durchführung:

Autoklav, HF und $PCl_3$ auf Trockeneis vorgekühlt. Anschließend HF und Brom im Autoklaven vereinigt (Brom wurde sofort fest) und $PCl_3$ dazugegeben. Autoklav verschlossen und auf Raumtemperatur erwärmt. Dabei gleichmäßiger Temperaturanstieg bis 10 °C, dann Temperatursprung auf 25 °C und Druckanstieg auf 18 bar. Die Isolierung des hergestellten $PF_5$ kann durch übliche Trennmethoden, z. B. eine Druckdestillation, erfolgen. Gewünschtenfalls kann das $PF_5$ ohne Isolierung weiterverarbeitet werden, beispielsweise mit LiF zu $LiPF_6$.

**Beispiel 3:**

Herstellung von $AsF_5$ (batch-Verfahren)

Reaktion:

$$AsCl_3 + 5HF + Cl_2 \text{-------}> AsF_5 + 5HCl$$

| Ansatz: | |
| --- | --- |
| Ansatz: 1/10 Mol | |
| AsCl$_3$ (181,3 g/Mol) d = 2,16 g/cm$^3$ | 25 ml |
| HF (20 g/Mol) d = 1 g/cm$^3$ | 40 ml |
| Cl$_2$ (35,5 g/Mol) | 21 g |

Durchführung:

AsCl$_3$ und HF im 250 ml Autoklaven vorgelegt, auf -43 °C abgekühlt und das Chlor in die Flüssigphase eingeleitet. Dabei Temperaturanstieg auf -35 °C. Anschließend Autoklav auf Rühren gestellt und auf Raumtemperatur erwärmt. Die Temperatur erreichte nach 4 Stunden Raumtemperatur (22 °C), und es stellte sich ein Druck von 21,5 bar ein. Über Nacht unter Rühren stehengelassen und am nächsten Morgen in 4 Stunden auf 50 °C erwärmt; der Druck stieg auf 27 bar. Nach Abkühlung auf Raumtemperatur wieder 21 bar. Die Isolierung des gebildeten AsF$_5$ kann durch übliche Trennmethoden, z. B. eine Druckdestillation, erfolgen. Das AsF$_5$ kann gewünschtenfalls auch ohne Isolierung weiterverarbeitet werden, z. B. mit LiF zu LiAsF$_6$.

**Beispiel 4:**

Herstellung von PF$_5$ (kontinuierliche Cl$_2$-Zugabe)

| Ausgangsprodukte | |
| --- | --- |
| Phosphortrichlorid | Masse: 61,8 g = 0,45 mol |
| Fluorwasserstoff (hochrein) | Masse: 76,9 g = 3,84 mol, zur Umsetzung m. d. PCl$_3$; Überschuß von 1,59 mol = 70,7 % |
| Chlor / Cl$_2$ | Masse: 40,0 g = 0,56 mol |

Versuchsdurchführung

Die eingesetzten Gefäße wurden im Trockenschrank getrocknet. Im Laborautoklav wurde das Phosphortrichlorid vorgelegt und mehr als die äquivalent benötigte Menge an Fluorwasserstoff (mit N$_2$-Polster) langsam eindosiert (der Überschuß an HF dient als Lösemittel). Die Temperaturen im Laborautoklav während der nachfolgenden kontinuierlichen Chlordosierung im offenen System (Dauer: 355 min) lagen zwischen -65,7 °C und -21,7 °C. Während der Dosierung des Chlors entstand ein Gasgemisch aus PF$_5$ und HCl, das aus dem Autoklaven abgeführt wurde. Das Gemisch kann durch übliche Trennmethoden, z. B. Druckdestillation, getrennt werden.

**Beispiel 5:**

Herstellung von PF$_5$ aus PCl$_3$ und Cl$_2$

| Ausgangsprodukte | |
| --- | --- |
| Phosphortrichlorid | Masse : 45,9 g = 0,33 mol |
| HF | Masse : 106,8 g = 5,34 mol |
| Cl$_2$ | Masse : 23,9 g = 0,34 mol |

Das PCl$_3$ wurde in den Autoklaven eindosiert, der dann verschlossen wurde. Nach Kühlung des Autoklaven auf -57,6 °C wurde der Fluorwasserstoff zudosiert und erneut gekühlt, auf -59,3 °C. Dann wurde das Chlor zugegeben. Die Kühlung wurde dann entfernt, es kam zu einem Druckaufbau auf 43 bar bei 25,1 °C.

Das erhaltene Gasgemisch aus PF$_5$ und HCl wurde aus dem Autoklaven abgelassen und konnte ohne weitere Behandlung in einen Reaktor mit LiF geleitet werden, in welchem sich dann LiPF$_6$ bildete. Im Gasgemisch konnte kein

$PF_3$ nachgewiesen werden.

**Beispiel 6:**

Herstellung von $PF_5$ durch Umsetzung äquimolarer Mengen an $PCl_3$ und $Cl_2$

Beispiel 5 wurde wiederholt mit 45,3 g = 0,33 mol $PCl_3$, 23,5 g = 0,33 mol $Cl_2$ und 111,2 g = 5,56 mol HF. Das erhaltene $PF_5$/HCl-Gasgemisch konnte wiederum ohne weitere Behandlung zur Herstellung von $LiPF_6$ mit LiF umgesetzt werden. Im Gasgemisch konnte kein $PF_3$ nachgewiesen werden.

**Patentansprüche**

1. Verfahren zur Herstellung von $MF_5$, worin M für P oder As steht, durch Umsetzung von $MX_3$, worin M die obengenannte Bedeutung besitzt und X Fluor, Chlor oder Brom bedeutet, mit Chlor, Brom oder Jod sowie HF.

2. Verfahren nach Anspruch 1, dadurch gekennzeichnet, daß man $PCl_3$ oder $PBr_3$ mit Chlor oder Brom sowie HF umsetzt.

3. Verfahren nach Anspruch 1 oder 2, dadurch gekennzeichnet, daß HF im Überschuß eingesetzt wird und als Lösemittel fungiert.

**Revendications**

1. Procédé de préparation de $MF_5$, dans lequel M représente P ou As, par réaction de $MX_3$, où M a les significations données ci-dessus et X est le fluor, le chlore ou le brome, avec du chlore, du brome ou de l'iode, ainsi qu'avec du HF.

2. Procédé selon la revendication 1, caractérisé en ce qu'on fait réagir du $PCl_3$ ou du $PBr_3$ avec du chlore ou du brome, ainsi qu'avec du HF.

3. Procédé selon la revendication 1 ou 2, caractérisé en ce que le HF est utilisé en excès et joue le rôle d'un solvant.

**Claims**

1. A method for the preparation of $MF_5$, wherein M stands for P or As, by the reaction of $MX_3$, wherein M has the meaning given above and X is fluorine, chlorine or bromine, with chlorine, bromine or iodine and also HF.

2. A method according to Claim 1, characterised in that $PCl_3$ or $PBr_3$ is reacted with chlorine or bromine and also HF.

3. A method according to Claim 1 or 2, characterised in that HF is used in an excess and acts as a solvent.